# EUROPÄISCHE PATENTSCHRIFT

(11) **EP 1 515 010 B1**
(45) Veröffentlichungstag und Bekanntmachung des Hinweises auf die Patenterteilung: **02.08.2006**
(21) Anmeldenummer: 03020395.4
(22) Anmeldetag: 10.09.2003
(51) Int. Cl.: F01M 13/00, F16L 53/00, E03B 7/12

(54) **Elektrische Heizvorrichtung für eine Blowbyeinleitung, eine Fluidleitung und ein Verfahren zu deren Einbau**
Electric heating element for an engine breather system, fluid duct and method of construction
Elément electrique de chauffage pour un système de degazage d'un moteur, conduit et procédé de construction

(43) Veröffentlichungstag der Anmeldung: 16.03.2005
(73) Patentinhaber: DBK David + Baader GmbH, 76870 Kandel (DE)
(72) Erfinder: Gschwind, Thomas, 67098 Bad Dürkheim (DE)
(74) Vertreter: Grünecker, Kinkeldey, Stockmair & Schwanhäusser Anwaltssozietät

(56) Entgegenhaltungen:
- EP-A- 1 213 451
- WO-A-03/021087
- US-A- 6 044 829
- US-A- 6 062 206
- PATENT ABSTRACTS OF JAPAN vol. 2000, no. 25, 12. April 2001 (2001-04-12) & JP 2001 214995 A (PACIFIC IND CO LTD), 10. August 2001 (2001-08-10)

## Beschreibung

Die Erfindung betrifft eine elektrische Heizvorrichtung, die in einen Mündungsbereich einer Entlüftungsleitung in eine Ansaugleitung, insbesondere einer Entlüftungsleitung für Blowby-Gase einer Verbrennungskraftmaschine, einbaubar ausgestaltet ist, mit einem Heizelement und einem mit dem Heizelement wärmeleitend verbundenen Heizkörper, durch den die Blowby-Gase in der Entlüftungsleitung erwärmbar sind.

Elektrische Heizvorrichtungen der genannten Art werden insbesondere für Blowby-Gase von Verbrennungskraftmaschinen eingesetzt. Blowby-Gase entstehen durch Leckgasströme zwischen Kolben, Kolbenringen und Zylinderlaufflächen in einem Kurbelgehäuse der Verbrennungskraftmaschine. Blowby-Gase enthalten verschiedene feste und fluide Stoffe, die zum Teil von unverbranntem Kraftstoff, aber auch vom Motoröl stammen können. Aus Gründen des Emissionsschutzes werden die Blowby-Gase nicht an die Außenluft abgegeben, sondern über eine Entlüftungsleitung vom Kurbelgehäuse der Ansaugluft beigemengt. Über die Ansaugluft werden die Blowby-Gase dem Motor zugeführt, wo sie zum Teil verbrannt werden. Die Vermischung der Ansaugluft mit den Blowby-Gasen findet an der Blowbyeinleitung statt, an der die Entlüftungsleitung des Kurbelgehäuses in die Ansaugleitung mündet.

Bei tiefen Außentemperaturen, z. B. bei einem Kaltstart eines Kraftfahrzeugmotors im Winter, herrschen starke Temperaturunterschiede zwischen dem warmen Blowby-Gas und der kalten Ansaugluft. Diese Temperaturunterschiede führen dazu, dass einige der im warmen Blowby-Gas enthaltenen fluiden Stoffe, wie z. B. Wasser, beim Zusammentreffen mit der kalten Ansaugluft kondensieren. Dadurch kann der Mündungsbereich vereisen. Eine solche Vereisung, die im Extremfall ein vollständiges Verschließen der Ansaugleitung zur Folge hat, kann zu einer Leistungsminderung der Verbrennungskraftmaschine führen, was in einen erhöhten Kraftstoffverbrauch resultiert. Des Weiteren ist die Rückführung des Blowby-Gases zu der Ansaugluft des Motors nicht mehr gewährleistet.

Im Stand der Technik werden daher Heizvorrichtungen eingesetzt, um das Vereisen der Blowbyeinleitung zu verhindern und um ein einwandfreies Entlüften des Kurbelgehäuses bei jeder Betriebstemperatur zu gewährleisten. Eine solche Heizvorrichtung ist beispielsweise in der US 6,062,206 beschrieben. Die elektrische Heizvorrichtung der US 6,062,206 ist in einem Stopfen angeordnet, der in eine seitliche Bohrung der Ansaugleitung einsteckbar ist und auf den wiederum die Entlüftungsleitung zum Kurbelgehäuse aufsteckbar ist. Die Heizvorrichtung der US 6,062,206 erstreckt sich dadurch entlang der Wandung der Entlüftungsleitung. Das Blowby-Gas wird vor dem Mündungsbereich der Entlüftungsleitung in die Ansaugleitung erwärmt, um ein Kondensieren und Vereisen des Blowby-Gases zu verhindern.

Nachteilig bei der in der US 6,062,206 beschriebenen Heizvorrichtung ist, dass zwar ein Zufrieren der Blowbyeinleitung vermieden werden kann, aber es in der Ansaugleitung zu einer Kondensation von bereits durch die Ansaugströmung mitgerissenen Blowby-Gases kommen kann. Dies beeinträchtigt die Luftzufuhr des Motors entscheidend und kann zu einer Leistungsminderung und einem erhöhten Kraftstoffverbrauch des Motors führen.

Der Erfindung liegt also die Aufgabe zugrunde, die bekannten Heizvorrichtungen zu verbessern, um ein Kondensieren des Blowby-Gases, auch bei extrem niedrigen Außentemperaturen, effektiver zu verhindern.

Erfindungsgemäß wird diese Aufgabe dadurch gelöst, dass sich der Heizkörper im eingebauten Zustand entlang der Wandung der Ansaugleitung erstreckt.

Diese erfindungsgemäße Lösung hat den Vorteil, dass das in der Einlassleitung strömende Gas auch nach dem Einleiten in die Ansaugleitung, die beispielsweise die Ansaugleitung eines Motors sein kann, erwärmbar ist. Hierdurch wird das in der Ansaugleitung entlangströmende Gas auch noch nach dem Mündungsbereich der Entlüftungsleitung erwärmt und ein Kondensieren verhindert.

Die erfindungsgemäße elektrische Heizvorrichtung kann durch eine Reihe von vorteilhaften, voneinander unabhängigen Ausgestaltungen weiterentwickelt werden. Auf diese Ausgestaltungen und die mit den Ausgestaltungen jeweils verbundenen Vorteile wird im Folgenden kurz eingegangen.

So kann in einer vorteilhaften Weiterbildung die elektrische Heizvorrichtung als eine einstückige, vormontierbare Baueinheit ausgeführt sein. Dies hat den Vorteil, dass die Heizvorrichtung ein eigenständiges Modul ist, das unabhängig produziert, separat ausgewechselt und in eine bereits bestehende Konstruktion einer Rohreinleitung nachträglich integriert werden kann.

Durch eine weitere vorteilhafte Ausgestaltung kann die elektrische Heizvorrichtung einen Heizbereich ausbilden, der in die Entlüftungsleitung einsteckbar ausgestaltet ist. Insbesondere kann der Heizbereich vom Inneren der Ansaugleitung in die Entlüftungsleitung einsteckbar ausgestaltet sein. Durch diese Maßnahme kann die Heizvorrichtung selbst dann ohne großen Aufwand montiert werden, wenn die Entlüftungsleitung und die Ansaugleitung vormontiert oder aus einem Stück, z. B. als Spritzgussteil, gefertigt sind. Darüber hinaus ist der Platzbedarf der erfindungsgemäßen Heizvorrichtung bei dieser Ausgestaltung außerhalb der Leitungen gering, wodurch wenig Motorraum beansprucht wird.

In einer ebenfalls vorteilhaften Weiterbildung kann die elektrische Heizvorrichtung einen Isolierkörper umfassen, der als ein Haltekörper ausgebildet sein kann und das Heizelement und den Heizkörper aufnimmt. Dies hat zum einen den Vorteil, dass der Isolierkörper die elektrische Heizvorrichtung elektrisch und gegen Wärmeverlust isoliert und zum anderen das Heizelement und den Heizkörper aufnimmt. Ferner kann der Isolierkörper in einer vorteilhaften Weiterbildung auch als Montageplattform ausgebildet sein, auf der Heizelement und Heizkörper zu einer einstückig handhabbaren Baueinheit vereint werden können. Hierbei kann der Isolierkörper Halteelemente in Form von Klemm- und Schnappverbindungen aufweisen. So können beispielsweise Aussparungen vorgesehen sein, in die Heizelement und Heizkörper z. B. durch Laschen einhakbar sind.

Ferner kann der Heizkörper in einer weiteren vorteilhaften Weiterbildung sich innerhalb der Ansaugleitung von dem Mündungsbereich der Entlüftungsleitung aus in Ansaugrichtung erstreckend ausgeführt sein. Dies lässt sich konstruktiv durch einen entsprechenden Heizfortsatz des Heizkörpers erreichen und hat den Vorteil, dass der Heizkörper den Gasstrom in der Ansaugleitung auch noch nach dem Mündungsbereich der Entlüftungsleitung, also in dem von der Mündung der Entlüftungsleitung stromab gelegenen Bereich der Vermischung der Blowby-Gase mit der Ansaugluft, in die Ansaugleitung erwärmt. Ein Erwärmen des Gasstroms in der Ansaugleitung in Ansaugrichtung vor der Mündung, also stromauf, der Entlüftungsleitung ist hierbei nicht notwendig, da vor dem Mündungsbereich der Entlüftungsleitung nicht mit einer Kondensation des Ansaugstroms zu rechnen ist.

In einer weiteren vorteilhaften Ausgestaltung kann der Heizkörperfortsatz innerhalb der Ansaugleitung eine Breite quer zur Ansaugrichtung haben, die im Wesentlichen dem Durchmesser der Entlüftungsleitung entspricht. Dies ist vorteilhaft, weil hierdurch nur der Bereich der Ansaugleitung erwärmt wird, in den erwartungsgemäß der eingeleitete Entlüftungsstrom aus der Entlüftungsleitung mitgerissen wird. Nur in diesem Bereich ist eine Kondensation des Entlüftungsstroms zu befürchten. Durch die Begrenzung der Heizkörperfläche ist diese Ausgestaltung besonders wärmeenergiesparend.

Ferner kann der Heizfortsatz in der Ansaugleitung in einer vorteilhaften Weiterbildung sich von dem Mündungsbereich der Entlüftungsleitung entlang der Wandung der Ansaugleitung in Richtung entgegen der Ansaugrichtung ausgeführt sein. Dies hat den Vorteil, dass der Ansaugstrom in der Ansaugleitung vor der Vermischung mit dem Entlüftungsstrom erwärmbar ist. Hierdurch wird ebenfalls die Möglichkeit der Kondensation des Ansaugstroms in der Ansaugleitung nach dem Mündungsbereich der Entlüftungsleitung verringert, weil die Temperaturdifferenz zwischen Entlüftungsstrom und Ansaugstrom durch das Erwärmen des Ansaugstroms in der Ansaugleitung verkleinert wird und mehr Flüssigkeit in der Ansaugluft gelöst werden kann.

Ferner kann das Heizelement in einer vorteilhaften Weiterbildung im eingebauten Zustand mindestens einen Stecker aufweisen, der sich in eingebautem Zustand außerhalb von Entlüftungs- und Ansaugleitung erstreckt und an eine Spannungsquelle, beispielsweise eine Autobatterie, anschließbar ausgestaltet ist. Dies hat den Vorteil, dass sich Anschlusskontakte für eine Stromversorgung leicht zugänglich außerhalb der Rohrleitungen befinden. Hierdurch können die Anschlüsse beispielsweise in einem Servicefall leicht gelöst werden, um die elektrische Heizvorrichtung auszutauschen.

In einer weiteren vorteilhaften Ausgestaltung kann das Heizelement als ein PTC-Heizelement (positive temperature coefficient) ausgeführt sein. Ein PTC-Heizelement hat die Eigenschaft, nur bis zu einer vorbestimmten Grenztemperatur zu heizen. Ab dieser Grenztemperatur erhöht sich der Widerstand sprungartig, so dass sich das PTC-Element nicht weiter erwärmen kann. PTC-Heizelemente sind dadurch selbstregelnd und bedürfen keiner zusätzlichen Temperatursteuerung, wodurch die elektrische Heizvorrichtung unkompliziert und von der Fahrzeugsteuerung unabhängig einsetzbar ist.

In einer vorteilhaften Weiterbildung kann ein Federelement vorgesehen sein, durch das bei eingebauter Heizvorrichtung eine Vorspannkraft erzeugbar ist, die das Heizelement gegen den Heizkörper drückt. Dies hat den Vorteil, dass ein guter Wärmeübergang zwischen Heizelement und Heizkörper gewährleistet ist. Das Federelement kann beispielsweise vom Isolierkörper ausgebildet werden, der das Heizelement gegen den Heizkörper drücken kann und umgekehrt. Alternativ oder zusätzlich können auch separate Federelement vorgesehen sein.

Ferner kann das Heizelement in einer vorteilhaften Weiterbildung außerhalb der Entlüftungsleitung und der Ansaugleitung angeordnet sein. Hierdurch ist das von der elektrischen Heizvorrichtung eingenommene Volumen in der Entlüftungs- und Ansaugleitung kleiner, wodurch der Entlüftungs- bzw. Ansaugstrom weniger behindert werden.

Um zu gewährleisten, dass die erzeugte Wärme von dem Heizkörper gut an das vorbeiströmende Gas abgegeben werden kann, kann der Heizkörper aus einem wärmeleitfähigen Material hergestellt sein.

In einer weiteren vorteilhaften Ausgestaltung kann der Heizkörper der erfindungsgemäßen elektrischen Heizvorrichtung aus einem korrosionsbeständigen Material hergestellt sein. Der Vorteil dieser Ausgestaltung besteht darin, dass der Heizkörper hierdurch widerstandsfähig gegen aggressive Bestandteile der Blowby-Gase ist. Insbesondere kann der Heizkörper aus Aluminium hergestellt sein, da Aluminium gleichzeitig gut wärmeleitfähig und korrosionsbeständig ist.

Ferner kann der Heizkörper elastisch ausgeführt sein, dies hat den Vorteil, dass die elektrische Heizvorrichtung in der Ansaugleitung und/oder Entlüftungsleitung durch eine durch elastische Verformung entstandene Federkraft fixiert wird, z. B. an der Wandung der Entlüftungsleitung.

In einer weiteren vorteilhaften Ausführungsform kann der Heizbereich wenigstens einen Teil der Wandung der Entlüftungsleitung ausbilden. Dies ist vorteilhaft, da der Wandungsbereich die Strömung für das Erwärmen vorteilhaft umschließt und die Gefahr der Abkühlung durch den ohne Heizvorrichtung kalten Wandungsbereich verringert wird.

Die Erfindung betrifft neben der oben erläuterten elektrischen Heizvorrichtung und deren Ausgestaltungen auch eine Fluidleitung, insbesondere für die Blowbygasrückführung an einem Motor, mit einem Mündungsbereich eines Entlüftungsleitungsteils in einen Ansaugleitungsteil. Um in einer solchen Fluidleitung ein Kondensieren der Entlüftungs- bzw. Ansaugströmung, auch bei extrem niedrigen Außentemperaturen, effektiv zu verhindern, ist die Fluidleitung eine elektrische Heizvorrichtung in einer der oben genannten Ausführungsformen aufnehmend ausgestaltet.

Die Fluidleitung kann ferner in einer vorteilhaften Weiterbildung mit einer Aufnahmeöffnung für das elektrische Heizelement ausgestaltet sein. Dies hat den Vorteil, dass das elektrische Heizelement in der Aufnahmeöffnung anbringbar ist und sich mindestens ein Stecker des elektrischen Heizelementes im eingebauten Zustand außerhalb der Fluidleitung befindet.

Die Erfindung betrifft neben den oben erläuterten Vorrichtungen und ihren weiteren Ausgestaltungen auch ein Verfahren bei dem eine elektrische Heizvorrichtung für ein Blowby-Gas in einer Entlüftungsleitung, die in einer Ansaugleitung mündet, montiert wird und wenigstens einen Teil der Wandung der Entlüftungsleitung bildet. Um ein Kondensieren des Blowby-Gases, auch bei extrem niedrigen Außentemperaturen, effektiver zu verhindern, ist erfindungsgemäß vorgesehen, dass ein sich entlang der Wandung der Ansaugleitung erstreckender Heizfortsatz in der Ansaugleitung angebracht wird.

Ferner kann ein Stecker der Heizvorrichtung in einer vorteilhaften Weiterbildung durch eine Aufnahmeöffnung in der Ansaugleitung oder der Entlüftungsleitung gesteckt werden. Hierdurch ist der Stecker außerhalb der Ansaug- oder Entlüftungsleitung an eine Spannungsquelle, z. B. eine Autobatterie, einfacher anschließbar.

Um die elektrische Heizvorrichtung in der Entlüftungsleitung besser zu befestigen, kann in einer vorteilhaften Weiterbildung ein sich in der Entlüftungsleitung erstreckender Heizbereich des Heizkörpers reibschlüssig mit der Entlüftungsleitung verbunden werden.

In einer weiteren vorteilhaften Ausgestaltung kann die Heizvorrichtung als einstückig handhabbare Moduleinheit vormontiert werden. Dies hat den Vorteil, dass die so ausgeführte Heizvorrichtung in einem Servicefall einfacher austauschbar ist.

Im Folgenden wird die Erfindung beispielhaft mit Bezug auf die beigefügten Zeichnungen erläutert. Die unterschiedlichen Merkmale können dabei unabhängig voneinander kombiniert werden, wie dies oben bei den einzelnen vorteilhaften Ausgestaltungen bereits dargelegt wurde.

Es zeigen:
- Fig. 1: eine Ausführungsform der erfindungsgemäßen elektrischen Heizvorrichtung schematisch in einer schematischen Perspektivansicht;
- Fig. 2: die Ausführungsform der elektrischen Heizvorrichtung aus Fig. 1 in einer anderen schematischen Ansicht;
- Fig.3: die elektrische Heizvorrichtung aus Fig. 1 und 2 im eingebauten Zustand;
- Fig. 4: die elektrische Heizvorrichtung aus Fig. 3 in einer anderen Ansicht;
- Fig. 5: eine schematische Darstellung des Strömungsverlaufs im Innern der Entlüftungs- und Ansaugleitung.

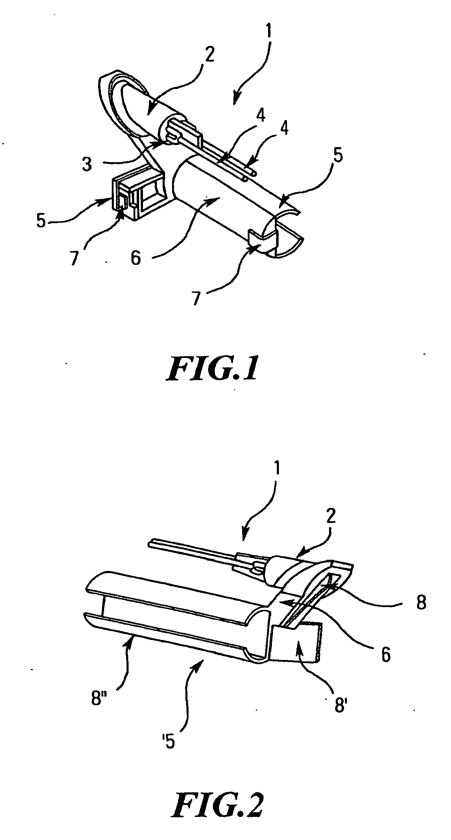

Zunächst wird der Aufbau einer erfindungsgemäßen elektrischen Heizvorrichtung 1 mit Bezug auf die beispielhaften Darstellungen der Fig. 1 und 2 beschrieben.

Die elektrische Heizvorrichtung 1 weist ein Heizelement 2 auf, mit dem Wärmeenergie aus elektrischer Energie erzeugbar ist. Hierzu ist das Heizelement 2 mit zwei Steckern 3 versehen, über die die elektrische Heizvorrichtung 1 mit zwei Anschlussleitungen 4 an eine Spannungsquelle (nicht dargestellt) anschließbar ist. Das Heizelement 2 ist beispielsweise als ein PTC-Heizelement ausgeführt.

Mit dem Heizelement 2 ist ein Heizkörper 5 wärmeleitend verbunden. Das Heizelement 2 wird durch ein Federelement gegen den Heizkörper 5 gedrückt, um einen guten Wärmeübergang von dem Heizelement 2 zu dem Heizkörper 5 zu gewährleisten. Der Heizkörper 5 ist aus einem Werkstoff hoher Wärmeleitfähigkeit und Korrosionsbeständigkeit, wie einem Metall, insbesondere Aluminium gefertigt, mit dem ein an dem Heizkörper 5 vorbeiströmender Gasstrom erwärmbar ist.

Des Weiteren weist die elektrische Heizvorrichtung 1 einen Isolierkörper 6 auf, der als ein Haltekörper ausgebildet ist und den Heizkörper 5 und das Heizelement 2 aufnimmt. Das Heizelement 2 wird von dem Isolierkörper 6 umschlossen und befindet sich im Innern von dem Isolierkörper 6. Der Heizkörper 5 ist beispielhaft mit Laschen 7 an dem Isolierkörper 6 befestigt, der dadurch als eine Montageplattform ausgeführt ist, auf der die gesamt Heizvorrichtung 1 baulich vereinigt ist.

Der Isolierkörper 6 hat außer seiner Funktion als Haltekörper ebenfalls die Funktion den Heizkörper 5 gegen ungewollte Wärmeableitung und das Heizelement 2 auch elektrisch zu isolieren. Aus diesem Grunde ist der Isolierkörper 6 bevorzugterweise aus einem Material mit einem geringen Wärmeleitwert und großem elektrischen Widerstand, z. B. einem Kunststoff, hergestellt.

Wie in Fig. 2 ersichtlich, ist der Heizkörper 5 mit einem Verbindungsabschnitt 8 ausgestaltet, durch den der Heizkörper 5 mit dem Heizelement 2 wärmeleitend verbunden ist. Im Bereich des Heizelementes 2 ist der Verbindungsabschnitt 8 mit einer dem Heizelement 2 angepassten Fläche gefertigt, um die Wärme des Heizelementes gut aufnehmen zu können. Dann setzt sich der Verbindungsabschnitt 8 streifenförmig zu den Bereichen des Heizkörpers 5 fort, die sich im eingebauten Zustand innerhalb der Entlüftungs- und Ansaugleitung befinden. Diese Bereiche sind ein Heizfortsatz 8' und ein Heizbereich 8".

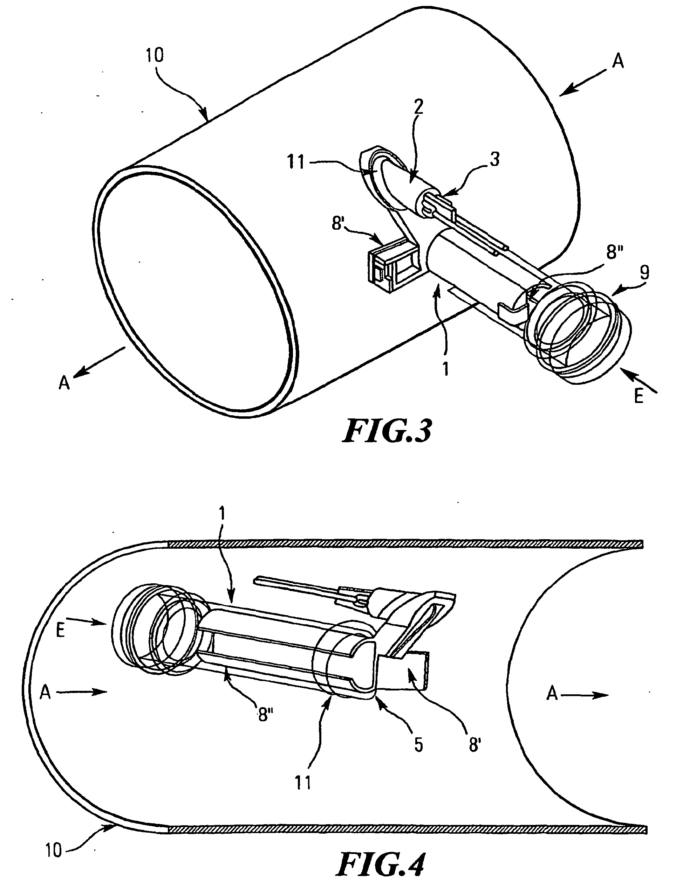

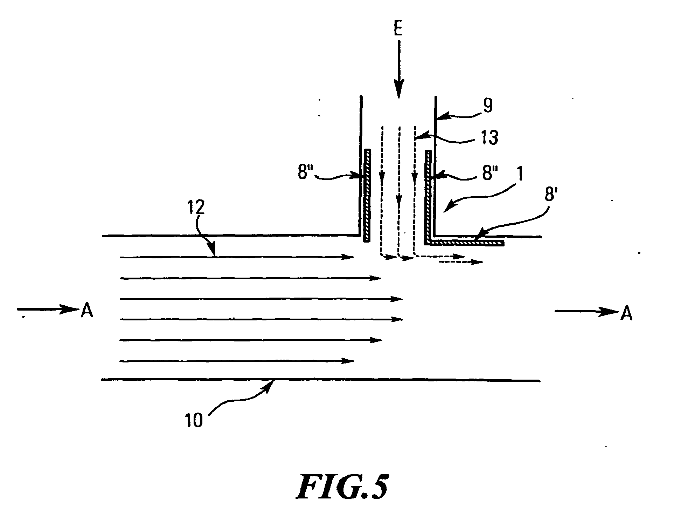

In den Fig. 3 und 4 ist die elektrische Heizvorrichtung in einem eingebauten Zustand beispielhaft dargestellt. Die elektrische Heizvorrichtung 1 ist hierbei in dem Mündungsbereich einer Entlüftungsleitung 9 in eine Ansaugleitung 10 angebracht, wobei in Fig. 4 die Ansaugleitung 10 im Schnitt dargestellt ist. Um die Einbaulage der erfindungsgemäßen elektrischen Heizvorrichtung 1 zu verdeutlichen, sind die Entlüftungsleitung 9 und die Ansaugleitung 10 in den Fig. 3 und 4 transparent dargestellt.

Die in den Fig. 3 und 4 beispielhaft dargestellte Ansaugleitung 10 kann z. B. die Ansaugleitung eines Motors eines Kraftfahrzeuges sein. Allerdings ist die Anwendung nicht auf Motoren beschränkt; die erfindungsgemäße Heizvorrichtung kann vielmehr bei Verbrennungskraftmaschinen jedweder Art eingesetzt werden. Hierbei ist die Ansaugrichtung die Richtung in der die Ansaugluft in Richtung des Motors strömt. Die Entlüftungsleitung 9 ist beispielsweise die Entlüftungsleitung vom Kurbelgehäuse (nicht dargestellt) des Motors. Hierbei verläuft ein Entlüftungsstrom aus Blowby-Gasen in einer Entlüftungsrichtung E innerhalb der Entlüftungsleitung 9. An dem Einlassbereich bzw. Mündungsbereich der Entlüftungsleitung 9 in die Ansaugleitung 10 ist die als eine einstückige vormontierbare Baueinheit ausgeführte elektrische Heizvorrichtung 1 von Innen in die Entlüftungsleitung 9 eingeschoben. Der Heizkörper 5 bildet in diesem Bereich den Heizbereich 8" in Form eines geschlitzten Rohrkörpers aus. Da der Heizkörper 5 aus einem elastischen Material hergestellt ist und der Durchmesser des geschlitzten Rohrkörpers im Wesentlichen größer als der Durchmesser der Entlüftungsleitung 9 ist, wird die elektrische Heizvorrichtung 1 durch eine Federkraft in der Entlüftungsleitung 9 fixiert, die durch ein elastisches Zusammendrücken des geschlitzten Rohrkörpers durch die Entlüftungsleitung 9 entsteht.

In der dargestellten Ausführungsform bildet der geschlitzte Rohrkörper einen Teil der den Entlüftungsstrom begrenzenden Wandung aus, wodurch der Entlüftungsstrom weniger mit der Wandung der Entlüftungsleitung 9 in Kontakt kommt, die z. B. im Winter sehr kalt sein kann und eine Kondensation des Entlüftungsstroms fördert. Durch die große Wärmeübergangsfläche werden zudem die Blowby-Gase in der Entlüftungsleitung 9 schnell erwärmt.

In der Ansaugleitung 10 ist eine Aufnahmeöffnung 11 angebracht, in der die elektrische Heizvorrichtung 1 zusätzlich befestigt ist und durch die das Heizelement 2 aus der Ansaugleitung 10 heraus nach außen ragt, wodurch sich die Stecker 3 ebenfalls außen befinden.

Wie in Fig. 4 zu sehen ist, verläuft der Heizkörper 5 der elektrischen Heizvorrichtung 1 sowohl entlang eines Wandbereichs der Entlüftungsleitung 9 als auch der Ansaugleitung 10. In der Ansaugleitung 10 bildet der Heizkörper 5 den Heizfortsatz 8' aus, der sich von dem Mündungsbereich der Entlüftungsleitung 9 in die Ansaugrichtung A entlang der Wandung der Ansaugleitung 10 erstreckt. Der Heizfortsatz 8' kann sich aber auch in der Ansaugleitung 10 entgegen oder noch weiter in Ansaugrichtung A als in dem Beispiel in Fig. 3 und 4 dargestellt, erstrecken. Auch kann sich der Heizfortsatz 8' der erfindungsgemäßen elektrischen Heizvorrichtung 1 ober- oder unterhalb des Mündungsbereichs von der Entlüftungsleitung 9 entlang der Wandung der Ansaugleitung 10 erstrecken. Bei der beispielhaften Darstellung der erfindungsgemäßen Heizvorrichtung 1 in den Fig. 3 und 4 ist die Breite des Heizfortsatzes 8' quer zur Ansaugrichtung A im Wesentlichen gleich dem Durchmesser der Entlüftungsleitung 9. Hierdurch wird nur der Bereich der Ansaugleitung 10 beheizt, in den der Gasstrom aus der Entlüftungsleitung 9 mitgerissen wird.

Fig. 5 zeigt den schematischen Strömungsverlauf in dem Mündungsbereich der Entlüftungsleitung 9 in die Ansaugleitung 10. Hierbei strömt ein Ansaugstrom 12 in der Ansaugleitung 10 in der Ansaugrichtung A und ein Entlüftungsstrom 13 in der Entlüftungsleitung 9 in einer Entlüftungsrichtung E. Vor dem Mündungsbereich zur Ansaugleitung 10 wird der Entlüftungsstrom 13 in der Entlüftungsleitung 9 durch den Heizbereich 8" der schraffiert dargestellten erfindungsgemäßen elektrischen Heizvorrichtung 1 beheizt. In dem Mündungsbereich der Entlüftungsleitung 9 in die Ansaugleitung 10 wird der Entlüftungsstrom 13 durch den Ansaugstrom 12 mitgerissen und in Ansaugrichtung A abgelenkt. Durch den Heizfortsatz 8' der erfindungsgemäßen elektrischen Heizvorrichtung 1 wird der Entlüftungsstrom 13 auch nach dem Verlassen des Mündungsbereichs von Entlüftungsleitung 9 in der Ansaugleitung 10 weiter beheizt.

## Patentansprüche

1. Elektrische Heizvorrichtung (1), die in einen Mündungsbereich einer Entlüftungsleitung (9) in eine Ansaugleitung (10), insbesondere einer Entlüftungsleitung für Blowby-Gase einer Verbrennungskraftmaschine, einbaubar ausgestaltet ist, mit einem Heizelement (2) und einem mit dem Heizelement (2) wärmeleitend verbundenen Heizkörper (5), durch den die Blowby-Gase in der Entlüftungsleitung (9) erwärmbar sind, **dadurch gekennzeichnet, dass** sich der Heizkörper (5) im eingebauten Zustand von dem Mündungsbereich aus, entlang der Wandung der Ansaugleitung (10) erstreckt.

2. Elektrische Heizvorrichtung (1) nach Anspruch 1, **dadurch gekennzeichnet, dass** die elektrische Heizvorrichtung (1) als eine einstückig, vormontierbare Baueinheit ausgeführt ist.

3. Elektrische Heizvorrichtung (1) nach Anspruch 1 oder 2, **dadurch gekennzeichnet, dass** die elektrische Heizvorrichtung (1) einen Heizbereich (8") ausbildet, der in die Entlüftungsleitung (9) einsteckbar ausgestaltet ist.

4. Elektrische Heizvorrichtung (1) nach einem der oben genannten Ansprüche, **dadurch gekennzeichnet, dass** die elektrische Heizvorrichtung (1) einen Isolierkörper (6) umfasst, der als ein Haltekörper ausgebildet ist und das Heizelement (2) und den Heizkörper (5) aufnimmt.

5. Elektrische Heizvorrichtung (1) nach einem der oben genannten Ansprüche, **dadurch gekennzeichnet, dass** die elektrische Heizvorrichtung (1) einen Heizfortsatz (8') ausbildet, der sich in der Ansaugleitung (10) von dem Mündungsbereich der Entlüftungsleitung (9) aus entlang der Wandung der Ansaugleitung (10) in Ansaugrichtung (A) erstrecktend ausgestaltet ist.

6. Elektrische Heizvorrichtung (1) nach einem der oben genannten Ansprüche, **dadurch gekennzeichnet, dass** der Heizfortsatz (8') eine Breite quer zur Ansaugrichtung (A) hat, die im Wesentlichen dem Durchmesser der Entlüftungsleitung (9) entspricht.

7. Elektrische Heizvorrichtung (1) nach einem der oben genannten Ansprüche, **dadurch gekennzeichnet, dass** der Heizfortsatz (8') in der Ansaugleitung (10) sich von dem Mündungsbereich der Entlüftungsleitung (9) entlang der Wandung der Ansaugleitung (10) in Richtung entgegen der Ansaugrichtung (A) ausgeführt ist.

8. Elektrische Heizvorrichtung (1) nach einem der oben genannten Ansprüche, **dadurch gekennzeichnet, dass** das Heizelement (2) mindestens einen Stecker aufweist, der sich in eingebauten Zustand außerhalb der Entlüftungs- (9) und der Ansaugleitung (10) erstreckt und an eine Spannungsquelle anschließbar ausgestaltet ist.

9. Elektrische Heizvorrichtung (1) nach einem der oben genannten Ansprüche, **dadurch gekennzeichnet, dass** das Heizelement (2) als ein PTC-Heizelement ausgeführt ist.

10. Elektrische Heizvorrichtung (1) nach einem der oben genannten Ansprüche, **dadurch gekennzeichnet, dass** ein Federelement vorgesehen ist, durch das bei eingebauter Heizvorrichtung eine Vorspannung erzeugbar ist, die das Heizelement (2) gegen den Heizkörper (5) drückt.

11. Elektrische Heizvorrichtung (1) nach einem der oben genannten Ansprüche, **dadurch gekennzeichnet, dass** das Heizelement (2) außerhalb von Entlüftungs- (9) und Ansaugleitung (10) angeordnet ist.

12. Elektrische Heizvorrichtung (1) nach einem der oben genannten Ansprüche, **dadurch gekennzeichnet, dass** der Heizkörper (5) aus einem wärmeleitfähigen Material gefertigt ist.

13. Elektrische Heizvorrichtung (1) nach einem der oben genannten Ansprüche, **dadurch gekennzeichnet, dass** der Heizkörper (5) aus einem korrosionsbeständigem Material gefertigt ist.

14. Elektrische Heizvorrichtung (1) nach einem der oben genannten Ansprüche, **dadurch gekennzeichnet, dass** der Heizkörper (5) aus einem elastischen Material gefertigt ist.

15. Elektrische Heizvorrichtung (1) nach einem der oben genannten Ansprüche, **dadurch gekennzeichnet, dass** der Heizkörper (5) aus Aluminium gefertigt ist.

16. Elektrische Heizvorrichtung (1) nach einem der oben genannten Ansprüche, **dadurch gekennzeichnet, dass** der Heizbereich (8") wenigstens einen Teil der Wandung der Entlüftungsleitung ausbildet.

17. Fluidleitung, insbesondere für die Blowby-Gasrückführung an einem Motor, mit einem Mündungsbereich eines Entlüftungsleitungsteils in einen Ansaugleitungsteil, **dadurch gekennzeichnet, dass** die Fluidleitung eine elektrische Heizvorrichtung (1) nach einem der oben genannten Ansprüche aufnehmend ausgestaltet ist.

18. Fluidleitung nach Anspruch 17, **dadurch gekennzeichnet, dass** die Fluidleitung mit einer Aufnahmeöffnung (11) für das elektrische Heizelement (1) ausgestaltet ist.

19. Verfahren bei dem eine elektrische Heizvorrichtung (1) für ein Blowby-Gas in einer Entlüftungsleitung (9), die in einer Ansaugleitung (10) in eines Mündungsbereich mündet, montiert wird und wenigstens einen Teil der Wandung der Entlüftungsleitung (9) bildet, **dadurch gekennzeichnet, dass** ein sich von dem Mündungsbereich aus entlang der Wandung der Ansaugleitung erstreckender Heizfortsatz (8') in der Ansaugleitung (10) angebracht wird.

20. Verfahren nach Anspruch 19, **dadurch gekennzeichnet, dass** ein Stecker der Heizvorrichtung (1) durch eine Aufnahmeöffnung (11) in der Ansaugleitung (10) oder der Entlüftungsleitung (9) gesteckt wird.

21. Verfahren nach Anspruch 19 oder 20, **dadurch gekennzeichnet, dass** ein sich in der Entlüftungsleitung erstreckender Heizbereich (8") des Heizkörpers (5) reibschlüssig mit der Entlüftungsleitung (9) verbunden wird.

22. Verfahren nach einem der oben genannten Ansprüche, **dadurch gekennzeichnet, dass** die Heizvorrichtung (1) als einstückig handhabbare Moduleinheit vormontiert wird.

## Claims

1. Electric heating device (1), which is formed to be incorporated in an opening region of a ventilation duct (9) into an intake duct (10), in particular in a ventilation duct for blowby gases of an internal combustion engine, comprising a heating element (2) and a heating body (5) connected to the heating element (2) so as to conduct heat, by means of which the blowby gases in the ventilation duct (9) may be heated, **characterised in that** the heating body (5) extends in the installed state from the opening region along the wall of the intake duct (10).

2. Electric heating device (1) according to claim 1, **characterised in that** the electric heating device (1) is formed as an integral, pre-mountable structural unit.

3. Electric heating device (1) according to claim 1 or 2, **characterised in that** the electric heating device (1) forms a heating region (8"), which is formed to be insertable into the ventilation duct (9).

4. Electric heating device (1) according to one of the preceding claims, **characterised in that** the electric heating device (1) comprises an insulating body (6), which is formed as a holding body and receives the heating element (2) and the heating body (5).

5. Electric heating device (1) according to one of the preceding claims, **characterised in that** the electric heating device (1) forms a heating extension (8'), which is formed so as to extend in the intake duct (10) from the opening region of the ventilation duct (9) along the wall of the intake duct (10) in the intake direction (A).

6. Electric heating device (1) according to one of the preceding claims, **characterised in that** the heating extension (8') has a breadth transverse to the intake direction (A) which substantially corresponds to the diameter of the ventilation duct (9).

7. Electric heating device (1) according to one of the preceding claims, **characterised in that** the heating extension (8') in the intake duct (10) is formed extending from the opening region of the ventilation duct (9) along the wall of the intake duct (10) in the direction counter to the intake direction (A).

8. Electric heating device (1) according to one of the preceding claims, **characterised in that** the heating element (2) has at least one plug, which in the installed state extends outside the ventilation duct (9) and intake duct (10) and is formed to be connectable to a voltage source.

9. Electric heating device (1) according to one of the preceding claims, **characterised in that** the heating element (2) is formed as a PTC heating element.

10. Electric heating device (1) according to one of the preceding claims, **characterised in that** a spring element is provided, by means of which when the heating device is installed a bias may be generated, which pushes the heating element (2) against the heating body (5).

11. Electric heating device (1) according to one of the preceding claims, **characterised in that** the heating element (2) is disposed outside the ventilation duct (9) and intake duct (10).

12. Electric heating device (1) according to one of the preceding claims, **characterised in that** the heating body (5) is manufactured from a heat-conducting material.

13. Electric heating device (1) according to one of the preceding claims, **characterised in that** the heating body (5) is manufactured from a corrosion-resistant material,

14. Electric heating device (1) according to one of the preceding claims, **characterised in that** the heating body (5) is manufactured from a resilient material.

15. Electric heating device (1) according to one of the preceding claims, **characterised in that** the heating body (5) is manufactured from aluminium.

16. Electric heating device (1) according to one of the preceding claims, **characterised in that** the heating region (8") forms at least part of the wall of the ventilation duct.

17. Fluid duct, in particular for the blowby gas return to an engine, comprising an opening region of a ventilation duct part into an intake duct part, **characterised in that** the fluid duct is formed to receive an electric heating device (1) according to one of the preceding claims.

18. Fluid duct according to claim 17, **characterised in that** the fluid duct is formed with a receiving aperture (11) for the electric heating element (1).

19. Method in which an electric heating device (1) is assembled in a ventilation duct (9), which opens into an intake duct (10) in an opening region, and forms at least part of the wall of the ventilation duct (9), **characterised in that** a heating extension (8') extending from the opening region along the wall of the intake duct is mounted in the intake duct (10).

20. Method according to claim 19, **characterised in that** a plug of the heating device (1) is inserted through a receiving aperture (11) in the intake duct (10) or the ventilation duct (9).

21. Method according to claim 19 or 20, **characterised in that** a heating region (8") of the heating body (5) extending in the ventilation duct is connected by friction locking to the ventilation duct (9).

22. Method according to one of the preceding claims, **characterised in that** the heating device (1) is pre-assembled as an integrally operable modular unit.

## Revendications

1. Dispositif de chauffage électrique (1), qui est conçu pour pouvoir être installé dans une zone d'embouchure d'une conduite d'évacuation (9) dans une conduite d'aspiration (10), en particulier d'une conduite d'évacuation pour gaz blow-by d'un moteur à combustion interne, comprenant un élément chauffant (2) et un corps de chauffage (5) raccordé de manière thermoconductrice à l'élément chauffant (2), par lequel les gaz blow-by peuvent être chauffés dans la conduite d'évacuation (9), **caractérisé en ce que** le corps de chauffage (5) s'étend, à l'état état monté, depuis la zone d'embouchure le long de la paroi de la conduite d'aspiration (10).

2. Dispositif de chauffage électrique (1) selon la revendication 1, **caractérisé en ce que** le dispositif de chauffage électrique (1) est réalisé en tant qu'ensemble d'un seul tenant pouvant être préassemblé.

3. Dispositif de chauffage électrique (1) selon la revendication 1 ou 2, **caractérisé en ce que** le dispositif de chauffage électrique (1) forme une zone de chauffage (8") qui est conçue pour être insérée dans la conduite d'évacuation (9) par emboîtement.

4. Dispositif de chauffage électrique (1) selon l'une quelconque des revendications précédentes, **caractérisé en ce que** le dispositif de chauffage électrique (1) comprend un corps isolant (6) qui est réalisé en tant que corps de support et qui loge l'élément chauffant (2) et le corps de chauffage (5).

5. Dispositif de chauffage électrique (1) selon l'une quelconque des revendications précédentes, **caractérisé en ce que** le dispositif de chauffage électrique (1) forme un prolongement de chauffage (8') qui est conçu pour s'étendre dans la conduite d'aspiration (10) depuis la zone d'embouchure de la conduite d'évacuation (9) le long de la paroi de la conduite d'aspiration (10) dans le sens d'aspiration (A).

6. Dispositif de chauffage électrique (1) selon l'une quelconque des revendications précédentes, **caractérisé en ce que** le prolongement de chauffage (8') a une largeur transversale au sens d'aspiration (A) qui correspond essentiellement au diamètre de la conduite d'évacuation (9).

7. Dispositif de chauffage électrique (1) selon l'une quelconque des revendications précédentes, **caractérisé en ce que** le prolongement de chauffage (8') dans la conduite d'aspiration (10) est conçu pour s'étendre depuis la zone d'embouchure de la conduite d'évacuation (9) le long de la paroi de la conduite d'aspiration (10) dans le sens opposé au sens d'aspiration (A).

8. Dispositif de chauffage électrique (1) selon l'une quelconque des revendications précédentes, **caractérisé en ce que** l'élément chauffant (2) présente au moins une fiche qui, à l'état monté, s'étend hors de la conduite d'évacuation (9) et de la conduite d'aspiration (10) et est conçue pour être raccordée à une source de tension.

9. Dispositif de chauffage électrique (1) selon l'une quelconque des revendications précédentes, **caractérisé en ce que** l'élément chauffant (2) est réalisé en tant qu'élément chauffant CTP.

10. Dispositif de chauffage électrique (1) selon l'une quelconque des revendications précédentes, **caractérisé en ce qu'**un élément à ressort est prévu, par lequel, lorsque le dispositif de chauffage est monté, une précontrainte peut être produite, qui presse l'élément chauffant (2) contre le corps de chauffage (5).

11. Dispositif de chauffage électrique (1) selon l'une quelconque des revendications précédentes, **caractérisé en ce que** l'élément chauffant (2) est disposé hors de la conduite d'évacuation (9) et de la conduite d'aspiration (10).

12. Dispositif de chauffage électrique (1) selon l'une quelconque des revendications précédentes, **caractérisé en ce que** le corps de chauffage (5) est fait d'un matériau thermoconducteur.

13. Dispositif de chauffage électrique (1) selon l'une quelconque des revendications précédentes, **caractérisé en ce que** le corps de chauffage (5) est fait d'un matériau résistant à la corrosion.

14. Dispositif de chauffage électrique (1) selon l'une quelconque des revendications précédentes, **caractérisé en ce que** le corps de chauffage (5) est fait d'un matériau élastique.

15. Dispositif de chauffage électrique (1) selon l'une quelconque des revendications précédentes, **caractérisé en ce que** le corps de chauffage (5) est fait d'aluminium.

16. Dispositif de chauffage électrique (1) selon l'une quelconque des revendications précédentes, **caractérisé en ce que** la zone de chauffage (8") forme au moins une partie de la paroi de la conduite d'évacuation.

17. Conduite pour fluides, en particulier pour le renvoi de gaz blow-by dans un moteur, avec une zone d'embouchure d'une partie de conduite d'évacuation dans une partie de conduite d'aspiration, **caractérisée en ce que** la conduite pour fluides est conçue pour recevoir un dispositif de chauffage électrique (1) selon l'une quelconque des revendications précédentes.

18. Conduite pour fluides selon la revendication 17, **caractérisée en ce que** la conduite pour fluides est conçue avec une ouverture de réception (11) pour le dispositif de chauffage électrique (1).

19. Procédé dans lequel un dispositif de chauffage électrique (1) pour gaz blow-by est monté dans une conduite d'évacuation (9), qui débouche au niveau d'une zone d'embouchure dans une conduite d'aspiration (10), et forme au moins une partie de la paroi de la conduite d'évacuation (9), **caractérisé en ce qu'**un prolongement de chauffage (8') s'étendant depuis la zone d'embouchure le long de la paroi de la conduite d'aspiration est installé dans la conduite d'aspiration (10).

20. Procédé selon la revendication 19, **caractérisé en ce qu'**une fiche du dispositif de chauffage (1) est enfichée dans une ouverture de réception (11) dans la conduite d'aspiration (10) ou la conduite d'évacuation (9).

21. Procédé selon la revendication 19 ou 20, **caractérisé en ce qu'**une zone de chauffage (8") du corps de chauffage (5) s'étendant dans la conduite d'évacuation est raccordée par frottement à la conduite d'évacuation (9).

22. Procédé selon l'une quelconque des revendications précédentes, **caractérisé en ce que** le dispositif de chauffage (1) est prémonté en tant qu'ensemble modulaire manipulable d'un seul tenant.
